# EUROPEAN PATENT APPLICATION

(11) **EP 0 650 663 A1**
(43) Date of publication of application: **03.05.1995**
(21) Application number: 94308094.5
(22) Date of filing: 02.11.1994
(51) Int. Cl.: A01D 34/70, A01G 3/06

(54) **Collection trimmers**

(30) Priority: 02.11.1993 GB 9322528
(71) Applicant: ELECTROLUX OUTDOOR PRODUCTS LIMITED, Newton Aycliffe, Co Durham DL5 6UP (GB)
(72) Inventor: Trevor, Michael Darmon, Darlington, Co Durham DL3 8AA (GB); Smith, Ian, Darlington, Co Durham DL1 5JR (GB)
(74) Representative: Arthur, Bryan Edward

(57) **Abstract**

A grass trimming device includes a cutter head (1), a grass cutter member (3) supported by the cutter head and mounted for rotation in a cutting plane, a source (4) of pressure air, a power source (5), a drive line drivingly connecting the power source and the cutter member, a grass collection passage (6) for conveying cut grass from a mouth (7) disposed at an upstream end of the passage and an air outlet opening into the collection passage at an upstream position for directing pressure air in a downstream direction in the passage. The cutter member rotates in the mouth of the collection passage with part of the arc of rotation extending outwardly from the mouth and, in operation, grass cut by the cutter member is drawn through the mouth and transported in a flow of pressure air downstream through the collection passage for collection.

## Description

This invention relates to hand-held grass trimming machines of the type in which a cutting member in the form of for example, a cutting disc, a blade or blades, or a cord is rotatable in a cutting plane, for example a horizontal plane, at high angular speeds to cut grass and other vegetation. Hand-held trimming machines of this kind are particularly useful for cutting long grass which may grow around obstacles on a lawn, such as trees, and cannot be cut using a lawn mower. When the rotating cutting member in the form of a cord or hinged blade(s) passes through light vegetation, the vegetation is trimmed, but when such a cutting member and especially a cord comes into contact with a more solid obstacle, such as a tree, the cord or blade is sufficiently flexible not to cause undue damage to the tree or to the trimming machine.

Various improvements have been made to such trimming machines. For example, in one machine it is possible to rotate the trimmer head to change the cutting plane so that the cutting member can be positioned to rotate not only in a conventional horizontal plane but also in a vertical plane for trimming the edge of a lawn. In this type of machine the head may be supported on a roller to stabilise the trimmer head during an edging operation. An example of a trimmer with a rotatable head is disclosed in our U.S. Patent number 4,894,914.

Conventional trimmers of this kind have a major disadvantage in that the grass cuttings are left lying on the ground. If the cuttings are left, they are unsightly, particularly if left in the middle of an otherwise tidy lawn. If the grass cuttings are to be collected, this is usually accomplished manually by raking thereby requiring more time and effort to be expended.

It is an object of the present ivnention to overcome, or at least reduce, the above disadvantage of a conventional trimmer.

A hand-held grass trimming device according to the present invention includes a cutter head, a grass cutter member supported by the cutter head and mounted for rotation in a cutting plane, a power source, a drive line drivingly connecting the power source and the cutter member, characterised by a source of pressure air, by a grass collection passage for conveying cut grass from a mouth disposed at an upstream end of the passage and by an air outlet for directing a flow of pressure air in a downstream direction in the passage whereby, in operation, grass cut by the cutter member is drawn through the mouth and transported in the flow of pressure air downstream through the collection passage for collection.

Embodiments of the invention will now be described by way of example with reference to the drawings in which:
Figure 1 shows a schematic cross-sectional side elevation of an edging trimmer according to the present invention;
Figure 2 shows a schematic cross-sectional side elevation of a horizontal trimmer according to the present invention;
Figure 3 shows a schematic cross-sectional side elevation of another embodiment of the edging trimmer according to the present invention; and
Figure 4 shows a schematic cross-section similar to Figure 3 of a further embodiment.

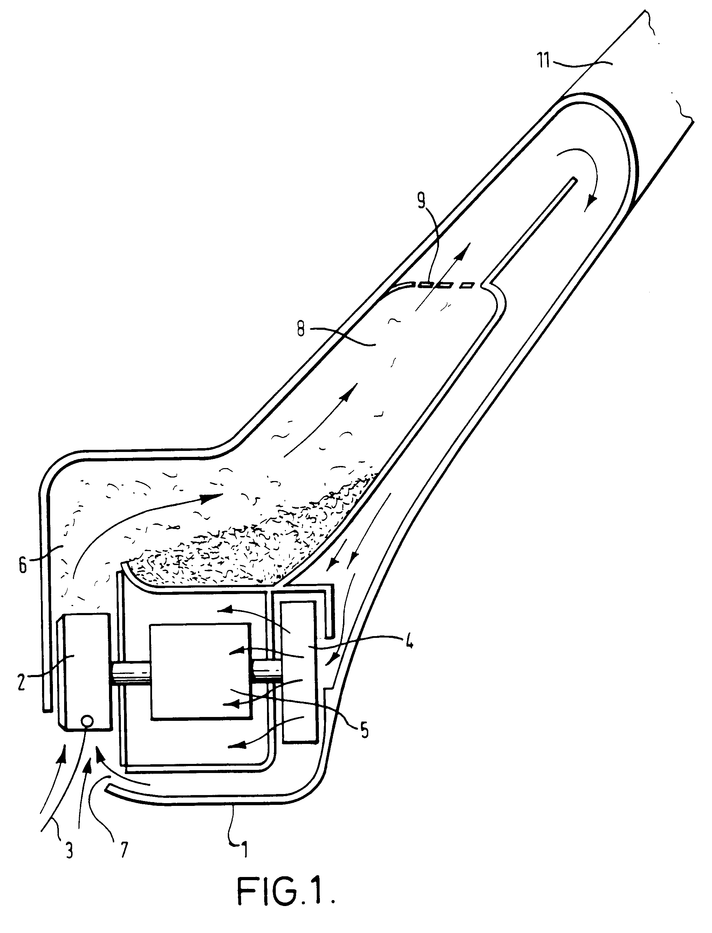

Figure 1 shows an edging trimmer with a vertical cutting plane.

In this following description of various embodiments of the invention like components are designated by like reference numbers.

The trimmer includes a cutter head (1) which is carried by a handle (11). The cutter head (1) contains a boss (2) rotatably mounted on a drive line. The boss (2) is adapted to carry one or more cutting members (3) in the form of a cord which, when the boss is rotating extends radially outwardly from the boss (2) under the action of centrifugal force. The present embodiment has only one cutting member (3). The cutting member (3) is preferably made of a flexible material such as plastic or nylon. The boss (2) is mounted for rotation in a vertical plane so that the cutting member (3) cuts the edge of the lawn to reduce the amount of grass overhanging the edge. The boss (2) is driven through a drive line by a motor (5). The motor (5) also drives an impeller (4) which produces a flow of pressure air. The impeller (4) directs the pressure air through an air outlet (7) in the cutter head (1). The impeller is disposed on the opposite side of the motor from the boss 2.

The cutter head (1) has a debris collection passage (6) which extends from an upstream end in the region of the cutting member (3) to a debris container (8). The collection passage (6) opens at the upstream end to form a collection mouth. The cutting member (3) rotates in the collection mouth with part of the arc of rotation of the cutting member (3) extending outwardly from the mouth, thereby cutting the grass. The pressure air enters the collection passage (6) in a downstream direction from the air outlet (7). The air outlet (7) is disposed adjacent to the mouth and directs the air across the mouth in a downstream direction, thereby inducing a flow of air through the mouth and into the collection passage (6). This induced flow of air entrains cut grass and debris from the region of the cutting member (3) and urges it via the collection mouth and into the collection passage (6). The flow of air then carries the cut grass and debris in a downstream direction through the passage (6) and into the debris container (8). The air passes through an air permeable filter (9) and the grass cuttings and debris are retained in the debris container (8). The debris container (8) may be emptied by removal of the whole container or access may be achieved via a door. Alternatively, an air permeable disposable collection bag may be removably mounted within the container. The air permeable bag may also function as a filter.

Once the air has passed through the filter (9) the air is recirculated to the impeller (4) where it is further pressurised and fed through the air outlet (7). The impeller 4 therefore sucks air from the container 8, lowering the air pressure at the downstream end of the collection passage 6 to generate increased air flow through the collection mouth for enhanced collection. Some venting of the recycled air is necessary in order to prevent build up of pressure in the circuit. Part of the air which flows from the filter (9) to the impeller (4) may be directed to cool the motor (5). It is an advantage to direct ambient air over the motor 5 since ambient air is likely to be cooler than recycled air.

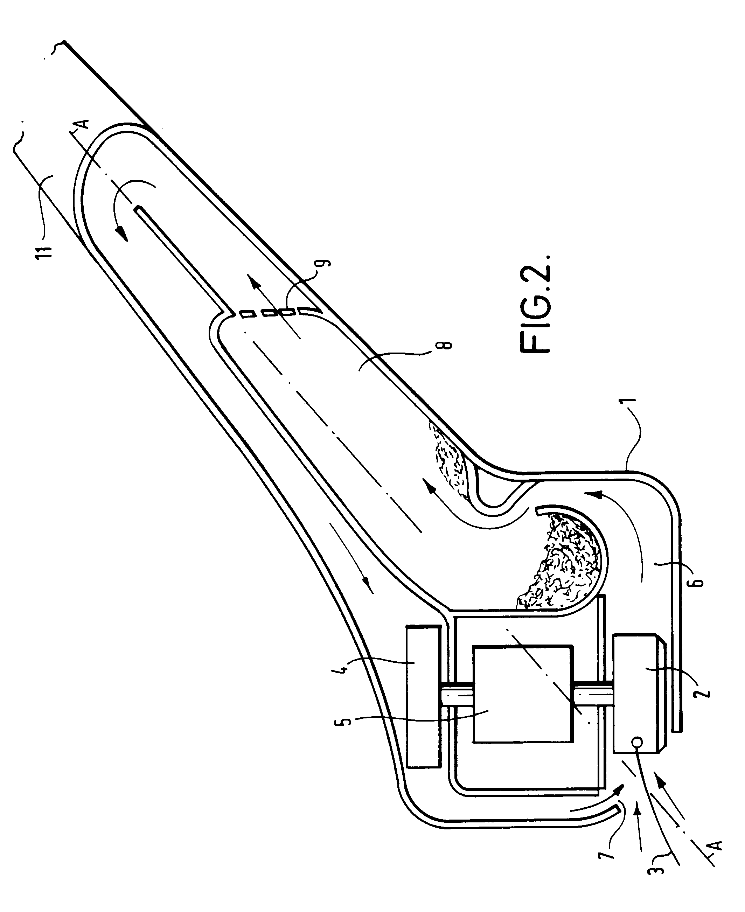

Figure 2 shows a trimmer which differs form that shown in Figure 1 in that the cutting member (3) is mounted on the boss (2) for rotation in a substantially horizontal cutting plane. This embodiment is useful for trimming grass and other vegetation from around trees and other obstacles. The motor (5) drives the impeller (4) and the cutting member (3) and pressurised air from the impeller (4) is directed into the collection passage (6) from the region of the collection mouth via the outlet (7). Air from outside the collection passage (6) is, therefore, drawn through the collection mouth and into the collection passage (6). The induced airflow entrains debris and cut grass and directs it towards the collection container (8). The collection container (8) is a different shape to that in Figure 1 since, if the trimmer in Figure 1 were used in a horizontal mode, the grass cuttings and debris would fall back towards the cutting member (3) and cause blockage.

The trimmer shown in Figure 2 is convertible between the horizontal cutting position (shown) and a vertical edge cutting position. The cutting head (1) may be twisted around on the handle between the two or more positions about Axis A. In some situations, the axis A need not pass through the centre of the cutter head (1) nor through the longitudinal centre line of the handle (11).

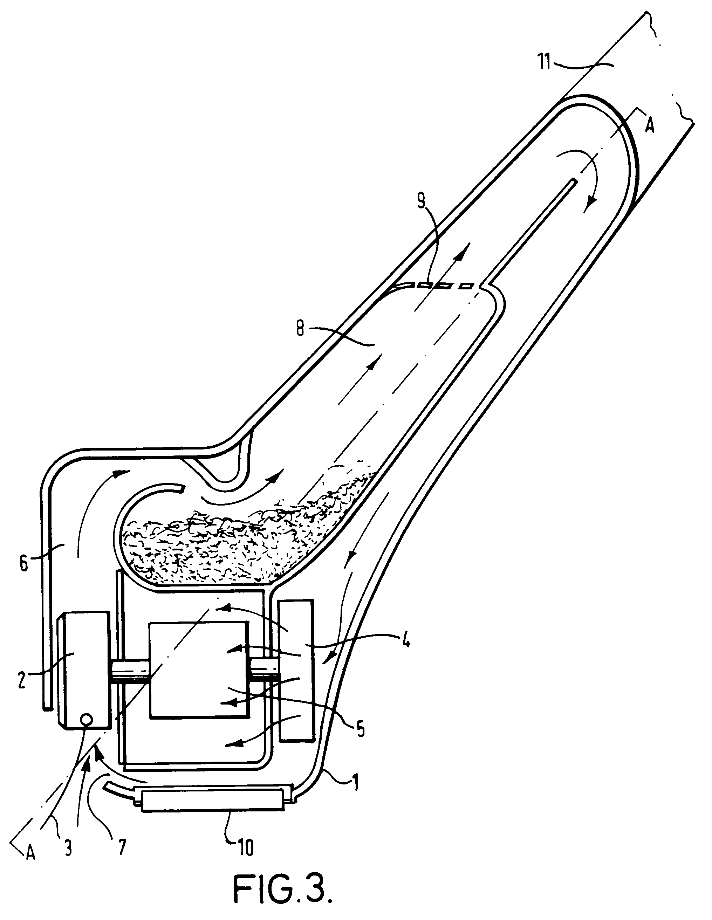

Figure 3 shows the trimmer in its vertical edge cutting position. This trimmer includes a ground engaging roller (10) which stabilises the trimmer and assists in obtaining a straight and even edge to a lawn. The debris and grass cuttings are collected as in the earlier embodiments, and the debris container (8) is shaped so that it retains debris and grass cuttings when the cutter head (1) is in the vertical edge cutting position and in the horizontal cutting position.

Referring to Figure 3 the cutter head (1) is rotatable about axis A with respect to the handle (11). The head (1) may then be positioned in either the vertical edge cutting position or the horizontal cutting position. This is achieved by the cutting head (1) including a coupling surface which defines a parting plane at which the handle (11) is coupled to the cutter head (1). The parting plane extends laterally with respect to the handle, permitting relative angular movement at the parting plane between the handle (11) and the cutting head (1) about a turning axis A which is disposed substantially perpendicularly to the parting plane. This turning axis A is usually oblique to the handle (11) so that relative movement between the handle (11) and the cutting head (1) about the parting plane positions the cutting plane of the cutter blade (1) in different operating orientations as described in US Patent No. 4,894,914.

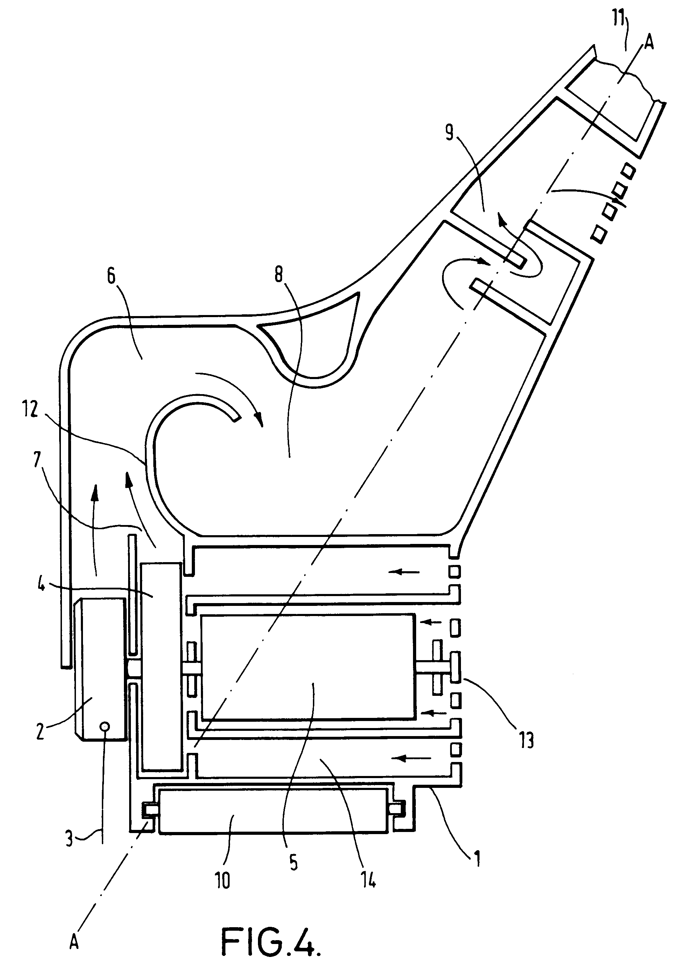

Figure 4 shows a further embodiment of a trimmer in a vertical edge cutting position. In this embodiment a ground engaging roller (10) stabilises the trimmer and assists in obtaining a straight and even edge to the lawn.

The trimmer includes a cutter head (1) which is carried by a handle (11). The cutter head (1) contains a boss (2) rotatably mounted on a drive line. The boss (2) is adapted to carry one or more cutting members (3) which, when the boss is rotating, extend radially outwardly from the boss (2). The present embodiment has only one cutting member (3). The cutting member (3) is preferably made of a flexible material such as a plastic or a nylon cord. The boss (2) is mounted for rotation in a vertical plane so that the cutting member (3) cuts the edge of the lawn to reduce the amount of grass overhanging the edge. The boss (2) is driven through a drive line by a motor (5). The motor (5) also drives an impeller (4) which acts as a source of pressure air. The impeller (4) directs the pressure air through an air outlet (7) in the cutter head (1). The impeller 4 is disposed between the motor 5 and the boss 2.

The cutter head (1) also includes a debris collection passage (6) which extends from an upstream end in the region of the cutting member (3) to a debris container (8) at a downstream end of the collection passage (6). The collection passage (6) opens at the upstream end to form a collection mouth. The cutting member (3) rotates in the collection mouth with part of the arc of rotation of the cutting member (3) extending outwardly from the mouth, thereby cutting the grass.

The impeller (4) is driven by the electric motor (5) to create a source of pressure air. Ambient air is drawn into the trimmer through apertures (13) and air under pressure is directed in direction shown (7). The air drawn in through apertures (13) is directed through the motor and serves to cool the motor. Additionally some incoming air may be directed through a passage (14) in order to supplement air supplied to the impeller (4). In use, high pressure air from the impeller (4) impinges on a convex surface (12) to produce a negative pressure in the region of the collection mouth inducing a flow of pressure air along the collection passage (6). This induced flow of air entrains cut grass and debris from the region of the cutting member (3) and urges it through the collection mouth and into the collection passage (6). The flow of air then carries the cut grass and debris in a downstream direction through the passage (6) and into the debris container (8). The air passes through an air permeable filter (9) and the grass cuttings and debris are retained in the debris container (8). The debris container (8) may be emptied by removal of the whole container or access may be achieved via a door. Alternatively an air permeable collection bag may be removably mounted within the container.

Referring to Figure 4 shows the cutter head (1) is rotatable about axis A with respect to the handle (11). The head (1) may then be positioned in the vertical edge cutting position or the horizontal cutting position or any intermediate position. This is achieved by the cutting head (1) including a coupling surface which defines a parting plane at which the handle (11) is coupled to the cutter head (1). The parting plane extends laterally with respect to the handle, permitting relative angular movement at the parting plane between the handle (11) and the cutting head (1) about a turning axis A which is disposed substantially perpendicularly to the parting plane. This turning axis A is usually oblique to the handle (11) so that relative movement between the handle (11) and the cutting head (1) about the parting plane positions the cutting plane of the cutter blade (1) in different operating orientations.

## Claims

1. A hand-held grass trimming device including a cutter head, a grass cutter member supported by the cutter head and mounted for rotation in a cutting plane, a power source, a drive line drivingly connecting the power source and the cutter member, characterised by a source of pressure air, by a grass collection passage for conveying cut grass from a mouth disposed at an upstream end of the passage and by an air outlet for directing a flow of pressure air in a downstream direction in the passage whereby in operation, grass cut by the cutter member is drawn through the mouth and transported in the flow of pressure air downstream through the collection passage for collection.

2. A device according to claim 1 characterised in that the cutter member is rotatable in the region of the mouth of the collection passage and with part of an arc of rotation ascribed by the cutter member extending outwardly from the mouth.

3. A device according to claim 1 or 2, wherein the source of pressure air is an impeller drivingly connected to the power source.

4. A device according to any preceding claim, including a grass collector, means for detachably connecting and disconnecting the grass collector from the device, and means for leading cut grass from the collection passage into the grass collector.

5. A device according to any preceding claim, including means for separating the cut grass from the flow of pressure air.

6. A device according to any one of claims 3, 4 or 5, wherein the impeller is disposed on that side of the power source remote from the cutter member.

7. A device according to any one of claims 3, 4 or 5, wherein the impeller is disposed between the power source and the cutter member.

8. A device according to claim 5, 6 or 7, including means for redirecting the flow of pressure air exhausted by the means for separating cut grass to the impeller.

9. A device according to any of claims 3 - 8, wherein ambient air is directed by the impeller to cool the power source prior to entry into the collection passage via the air outlet.

10. A device according to any preceding claim wherein the cutter member is a cutter disc, at least one blade, or a cord.

11. A device according to any preceding claim, including first access means permitting ambient air to be drawn over the power source to cool the power source.

12. A device according to any of claims 3 - 11, including second access means permitting ambient air drawn into the device by the impeller to by-pass the power source.
